# EUROPÄISCHE PATENTSCHRIFT

(11) **EP 1 777 128 B1**
(45) Veröffentlichungstag und Bekanntmachung des Hinweises auf die Patenterteilung: **05.08.2009**
(21) Anmeldenummer: 06121042.3
(22) Anmeldetag: 21.09.2006
(51) Int. Cl.: B60R 25/00, G07C 9/00

(54) **Elektronische Betätigungseinheit**
Electronic operation device
Dispositif d'activation électronique

(30) Priorität: 19.10.2005 DE 102005050461
(43) Veröffentlichungstag der Anmeldung: 25.04.2007
(73) Patentinhaber: HÜF Hülsbeck & Fürst GmbH & Co. KG, 42551 Velbert (DE)
(72) Erfinder: Habecke, Matthias, 45529, Hattingen (DE)
(74) Vertreter: Vogel, Andreas

(56) Entgegenhaltungen:
- EP-A- 1 060 963
- EP-A- 1 465 118
- EP-A1- 0 577 878
- WO-A-98/03949
- DE-A1- 19 605 201
- DE-C1- 19 964 166
- US-A1- 2003 231 131

## Beschreibung

Die Erfindung betrifft eine elektronische Betätigungseinheit für eine Schließvorrichtung eines Kraftfahrzeuges, mit einem Gehäuse aus Kunststoff, innerhalb dessen eine Elektronikeinheit für eine Datenkommunikation mit der Schließvorrichtung angeordnet ist, mit einer Vielzahl an Betätigungselementen zur Aktivierung eines Ver- und/oder Entriegelungsvorganges der Schließvorrichtung.

Schließvorrichtungen für Kraftfahrzeuge sind zur Steigerung des Komforts für den Benutzer und zur Erhöhung der Diebstahlsicherheit oft mit einer elektronischen Betätigungseinheit, insbesondere eines elektronischen Schlüssels, ausgestattet. Nach einer entsprechenden Betätigung durch den Benutzer erfolgt eine Datenkommunikation zwischen der elektronischen Betätigungseinheit und der Schließvorrichtung, bei der beispielsweise ein Code, vorzugsweise über elektromagnetische Wellen, ausgetauscht wird, so dass nach positiver Auswertung des Codes beispielsweise die Türen, der Kofferraumdeckel des Kraftfahrzeuges fernbedienbar ent- und/oder verriegelt sowie weitere Funktionen ausgelöst werden können.

In der DE 103 42 663 A1 ist ein elektronischer Schlüssel für ein Schließsystem eines Kraftfahrzeuges mit einem Gehäuseteil aus Kunststoff beschrieben, welches auf ein und derselben Seite drei Betätigungselemente für jeweils einen elektrischen Schalter aufweist. Ferner besteht das Gehäuseteil aus einem erhabenen, nicht betätigbaren Feld, welches zumindest teilweise die Betätigungselemente voneinander trennt. Dieses Feld lässt sich nicht eindrücken und nicht betätigen. Hierdurch soll eine tastbare Trennung zwischen den einzelnen Betätigungselementen ermöglicht werden.

Das Dokument EP-A-1 060 963 offenbart eine elektronische Betätigungseinheit gemäß dem Oberbegriff des Anspruchs 1.

Es ist Aufgabe der vorliegenden Erfindung eine elektronische Betätigungseinheit der Eingangs erwähnten Art in einer verbesserten Ausführungsform zu schaffen, bei welcher insbesondere die Handhabung der Betätigungselemente vereinfacht wird.

Zur Lösung dieser Aufgabe wird eine elektronische Betätigungseinheit mit den Merkmalen des Anspruches 1 vorgeschlagen. In den abhängigen Ansprüchen sind bevorzugte Weiterbildungen der Erfindung ausgeführt.

Erfindungsgemäß ist es vorgesehen, dass die Betätigungselemente benachbart zueinander liegende Betätigungsflächen aufweisen, wobei die einzelnen Betätigungsflächen eine Gesamtoberfläche bilden, die schuppenartig ausgeführt ist, wobei die Betätigungselemente einen erhöhten Bandbereich aufweisen, der taktil ausgestaltet ist, wodurch eine taktile Wahrnehmung der einzelnen Betätigungselemente, die unmittelbar aneinander anliegen erreichbar ist.

Die Betätigungselemente liegen unmittelbar aneinander an, ohne dass ein Element zwischen den einzelnen Betätigungselementen vorgesehen ist, wodurch ein kompakter Aufbau der Betätigungseinheit, insbesondere der Betätigungselemente zueinander bewirkt wird. Allein durch die schuppenartige Ausgestaltungsform der Gesamtoberfläche aller Betätigungsflächen kann der Bediener leicht durch taktile Wahrnehmung das jeweilige bzw. einzelne Betätigungselement lokalisieren. Durch ein Entlangstreichen an den Betätigungselementen gleitet der Finger oder der Daumen des Bedieners über die Betätigungsflächen, wodurch der Bediener diese aufgrund der schuppenartigen, insbesondere rampenförmigen Ausgestaltung der sich bildenden Gesamtoberfläche aller Betätigungselemente deutlich spürt und unterscheiden kann. Es hat sich gezeigt, dass eine derartige Ausgestaltung der Betätigungsoberflächen einen wesentlichen Beitrag zur Orientierung zwischen den Betätigungselementen leistet. Die Betätigungsflächen sind jeweils mit zumindest einem elektrischen Schalter, Taster od. dgl., der Bestandteil der innerhalb des Gehäuses liegenden Elektronikeinheit ist, in Wirkverbindung, wobei eine Betätigung des Betätigungselementes zu einer elektrischen Aktivierung des Schalters, Tasters od. dgl. führt und dadurch z. B. ein Datenaustausch bzw. eine Datenabfrage zwischen der handgehaltenen elektronischen Betätigungseinheit und der im Kraftfahrzeug angeordneten Schließvorrichtung gestartet wird. Die Elektronikeinheit kann hierbei eine Sende- und/oder Empfangseinheit aufweisen. Bei Betätigung eines Betätigungselementes kann ein Zugangskontrollverfahren gestartet werden, bei dem ein Sendeimpuls von der Betätigungseinheit zur kraftfahrzeugseitigen Schließvorrichtung übertragen wird. Vorzugsweise weist das Kraftfahrzeug ebenfalls eine Sende- und/oder Empfangseinheit auf, die mit der Schließvorrichtung verbunden ist, die dieses von der Betätigungseinheit gesendete Signal an ein Steuergerät für die Zugangsberechtigung weiterleitet. Wird hier der richtige Code erkannt, so wird die gewünschte elektronische Aktion bzw. Funktion im Fahrzeug, beispielsweise ein Türöffnen oder Türschließen durch eine entsprechende Ansteuerung des Tür-Steuergerätes aktiviert. Selbstverständlich sind auch weitere Zugangskontrollverfahren oder Sicherheitsverfahren im Rahmen dieser Erfindung anwendbar. Durch ein Bedienen des jeweiligen Betätigungselementes kann beispielsweise eine zentrale Ver- und/oder Entriegelung einer Fahrzeugtür, des Gepäckraumes oder der Tankverschlussabdeckung erfolgen.

In einer möglichen Ausführungsform der elektronischen Betätigungseinheit kann die Betätigungsfläche des Betätigungselementes planar, d. h. eben ausgeführt sein. Neben einer ebenen Ausgestaltungsform der Betätigungsfläche besteht in einer alternativen Ausführungsform die Möglichkeit, die Betätigungsfläche konkav bzw. bogenförmig auszuführen. Selbstverständlich kann die Gesamtoberfläche der Betätigungsoberfläche aus planaren und konkaven Betätigungsflächen bestehen.

Um eine taktile Wahrnehmung der einzelnen Betätigungselemente zu erleichtern, hat sich gezeigt, dass die planare Betätigungsfläche zur Oberfläche des Gehäuses in einem Winkel geneigt sein kann, der kleiner als 10°, vorzugsweise der kleiner als 5°, mehr bevorzugt als 3° und besonders bevorzugt kleiner als 1° sein kann.

Vorteilhafter Weise ist die Betätigungsfläche eines Betätigungselementes zur benachbarten Betätigungsfläche unterschiedlich stark geneigt. Auch hierdurch kann der Bediener taktil das jeweilige Betätigungselement erleichtert auffinden, die beispielsweise durch ihre schuppenartige Ausführungsform zumindest zu einer Seite erhaben ausgeführt sind.

In einer weiteren Ausgestaltungsform der Betätigungseinheit können die Betätigungselemente in Reihe, d.h. in Draufsicht auf die Betätigungseinheit nebeneinander oder hintereinander angeordnet sein. Dabei ist es auch denkbar, dass sich die einzelnen benachbarten Betätigungselemente bereichsweise überlappen. Ferner kann das Betätigungselement zumindest einen Druckpunkt zur Aktivierung des Ver- und/oder Entriegelungsvorganges aufweisen. Der Druckpunkt kann mittig oder am Randbereich der jeweiligen Betätigungsfläche vorgesehen sein. Der Druckpunkt kann auch im Bereich der erhabenen Zonen der Gesamtoberfläche aller einzelnen Betätigungsflächen liegen, die sich durch die schuppenartige Ausgestaltung bilden. Ebenfalls ist es denkbar, dass Betätigungselement mit mehreren Druckpunkten auszugestalten, wodurch beispielsweise einem Betätigungselement auf einfache Art und Weise mehrere Funktionen zugeordnet werden können.

Um die taktile Orientierung für den Anwender weiter zu verbessern, kann die Außenkontur des Betätigungselementes rund, oval, dreieckig, rechteckig, quadratisch oder vieleckig ausgeführt sein. Weitere geometrische Formen, wie beispielsweise sternförmig, der Außenkontur sind ebenfalls denkbar.

Eine die Erfindung verbessernde Maßnahme sieht optional vor, die Betätigungsfläche mit einer definierten Oberflächenrauhigkeit zu versehen, die vorzugsweise unterschiedlich zur Rauhigkeit der benachbarten Betätigungsfläche ist. Auch diese Ausführungsform erleichtert dem Benutzer ein Ertasten des jeweiligen Betätigungselementes. Durch eine gezielte Bearbeitung oder Fertigung der einzelnen Betätigungsoberflächen mit Hilfe gängiger Oberflächentechniken können Betätigungselemente geschaffen werden, die aufgrund ihrer Oberflächenrauhigkeit taktil zum benachbarten Betätigungselement unterscheidbar sind.

In der Regel sind die erfindungsgemäßen Betätigungselemente voneinander getrennt angeordnet. In einer möglichen Ausführungsform der Erfindung können die genannten Betätigungsflächen auch materialeinheitlich miteinander verbunden sein. Hierbei bestehen die Betätigungsflächen aus einer einzigen Oberfläche, die im Gehäuse der Betätigungseinheit befestigt ist. Die Befestigung der Betätigungselemente erfolgt in einer besonderen Ausgestaltungsmöglichkeit durch eine stoffschlüssige Verbindung. In diesem Fall ist eine Laserverschweißung denkbar. Alternative form- und/oder kraftschlüssige Verbindungen sind ebenfalls einsetzbar. Ebenfalls können die erwähnten Betätigungsflächen durch den Einsatz eines zusätzlichen Trägerelementes miteinander verbunden sein. Dieses Trägerelement kann beispielsweise auch zur Abdichtung des Gehäuses im Bereich der Betätigungsflächen dienen. Zu diesem Zweck kann das Trägerelement aus einer stabilen Folie oder verformbaren Platte bestehen, auf der die Betätigungselemente angeordnet sind. Hierzu können die Betätigungselemente durch beispielsweise Schweißen mit dem Trägerelement verbunden sein. Das Trägerelement kann ebenfalls durch eine Schweißverbindung oder eine feuchtigkeitsundurchlässige formschlüssige Verbindung mit einem Gehäuseteil verbunden sein.

Zusätzlich kann das Betätigungselement mit mindestens einem tastbaren Erkennungselement ausgestaltet sein. Das tastbare Erkennungselement ist vorzugsweise mittig auf der jeweiligen Betätigungsoberfläche positioniert, und kann gleichzeitig als Emblem, Logo oder Symbol ausgestaltet sein. In einer denkbaren Alternative ist das Erkennungselement leicht erhöht oder leicht versenkt in der Oberfläche des Betätigungselementes ausgebildet. Diese vertiefte oder erhöhte Anordnung kann wenige Zehntel Millimeter betragen, um dennoch eine zuverlässige taktile Wahrnehmung zu bewirken. Ferner können die Erkennungselemente in einer weiteren Ausgestaltungsform der Erfindung mit einem Material ausgeführt sein, welches Licht zumindest einer bestimmten Wellenlänge aus dem Inneren des Gehäuses transmittieren kann. Das bedeutet, dass für definierte Situationen das tastbare Erkennungselement zumindest für einen bestimmten Zeitabschnitt gleichzeitig visuell erkannt werden kann.

Vorteilhafter Weise ist das Gehäuse mit einer Ausnehmung ausgeführt, in der ein Notschlüssel anordbar ist. Dabei kann dieser Notschlüssel derart im Gehäuse integriert werden, dass er nicht daraus störend hervorsteht. Zu diesem Zweck kann ein Teil des Schlüssels im eigentlichen Gehäuse der Betätigungseinheit vorgesehen sein. Ein anderer Teil des Notschlüssels, der zum Beispiel als Handhabe für die Betätigung des Schlüssels dient, kann die Ausnehmung in dem Gehäuse formenmäßig ergänzen. Damit sich der Notschlüssel nicht unbeabsichtigt aus dem Gehäuse der Betätigungseinrichtung entfernen kann, kann er über ein Befestigungsmittel formschlüssig gesichert werden. Das Gehäuse, das vorzugsweise ein Spritzgussteil aus Kunststoff ist, kann ebenfalls einen drehbar gelagerten mechanischen Schlüssel aufweisen, der zwischen einer Hohllage und einer Arbeitslage verschwenkbar angeordnet ist. In der Hohllage kann der drehbar gelagerte Schlüssel ebenfalls in einer Ausnehmung in dem Gehäuse der Betätigungseinheit angeordnet sein.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im Einzelnen beschrieben sind. Dabei können die in den Ansprüchen und der Beschreibung erwähnten Merkmale einzeln für sich oder in beliebiger Kombination erfindungswesentlich sein. Es zeigen:
- Figur 1: eine perspektivische Darstellung einer elektronischen Betätigungseinheit,
- Figur 2: eine Schnittansicht gemäß der Schnittlinie II-II gemäß Figur 1,
- Figur 3: eine alternative Ausführungsform der Betätigungseinheit mit Betätigungselementen, deren Oberfläche konkav ausgebildet ist,
- Figur 4: eine weitere Ausführungsform der Betätigungselemente,
- Figur 5: eine zusätzliche Alternative der Ausgestaltung der Betätigungselemente,
- Figur 6: eine Draufsicht auf eine alternative Ausführungsform einer elektronischen Betätigungseinheit nicht gemäß der Erfindung.
- Figur 7: eine Schnittansicht gemäß Schnittlinie VI-VI gemäß Figur 6.

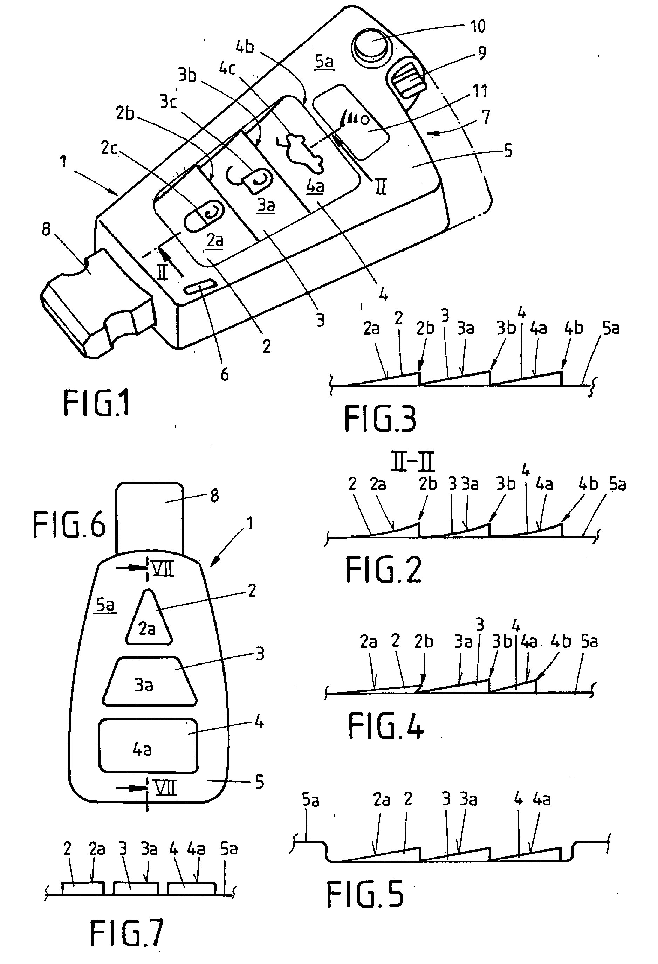

Figur 1 zeigt eine elektronische Betätigungseinheit 1, die im Folgenden als elektronischer Schlüssel 1 gezeigt wird, die für eine Schließvorrichtung eines Kraftfahrzeuges dient. Der elektronische Schlüssel 1 weist ein Gehäuse 5 auf, innerhalb dessen eine nicht dargestellte Elektronikeinheit für eine Datenkommunikation mit der Schließvorrichtung angeordnet ist. Oberhalb der Elektronikeinheit sind beispielsweise drei Betätigungselemente 2, 3, 4 angeordnet, die zur Aktivierung eines Ver- und/oder Entriegelungsvorganges der Schließvorrichtung dienen. Wie deutlich zu erkennen ist, sind die Betätigungselemente 2, 3, 4 benachbart zueinander liegend angeordnet. Das bedeutet, dass die Betätigungselemente 2, 3, 4 unmittelbar aneinander mit zumindest einer Seite des Randbereiches 2b, 3b, 4b der Betätigungsfläche 2a, 3a, 4a liegen. Die Betätigungselemente 2, 3, 4 weisen jeweils eine Betätigungsfläche 2a, 3a, 4a auf, die jeweils konkav ausgebildet sind, was in Figur 2 deutlich sichtbar ist.

Im vorderen Bereich des elektronischen Schlüssels 1 ist z.B. ein Frontteil 8 angeordnet, welcher in ein nicht dargestelltes Fahrzeugschloss, beispielsweise ein Zündschloss, einsteckbar ist. Der Frontteil 8 ist im vorliegenden Ausführungsbeispiel materialeinheitlich mit dem aus Kunststoff bestehenden Gehäuse 5 verbunden. Hierbei besteht das Gehäuse 5 aus zwei Gehäuseteilen, die aus einem harten und schlagfesten Kunststoff hergestellt sind. An der dem Frontteil 8 gegenüberliegenden Seite des Gehäuses 5 ist eine Ausnehmung 7 ausgeführt, in die ein nicht gezeigter Notschlüssel anordbar ist. Der Notschlüssel ist durch am Gehäuse 5 angeordnete Befestigungsmittel 9 zuverlässig fixierbar und kann durch einen mit dem Befestigungsmittel 9 gekoppelten Druckknopf 10 aus der Ausnehmung 7 leicht gelöst werden. Ebenfalls kann das Frontteil 8 einen mechanischen Schlüssel aufweisen, der sich beispielsweise in seiner Arbeitslage befindet. Auch dieser mechanische Schlüssel kann zur Betätigung eines Türschlosses oder eines Zündschlosses dienen. In diesem Fall kann auf den zuvor erwähnten Notschlüssel verzichtet werden.

Die Betätigungselemente 2, 3, 4 sind im dargestellten Ausführungsbeispiel in Reihe, nebeneinander angeordnet. Zwischen der Ausnehmung 7 und dem Betätigungselement 4 ist zusätzlich ein weiteres Betätigungselement 11 angeordnet, welches durch manuelle Aktivierung eine definierte Aktion in der Elektronikeinheit 4, beispielsweise einen Batterietest zur Überprüfung der Funktionsfähigkeit der elektrischen Betätigungseinheit 1 ausübt. Oberhalb des Betätigungselementes 2 im seitlichen Randbereich des Gehäuses 5 ist ein LED-Element 6 angeordnet, welches bei der vorliegenden Ausführungsform Licht imitiert, wenn z.B. eines der drei Betätigungselemente 2, 3, 4 durch den Bediener gedrückt werden. Auch ist es denkbar, dass z.B. durch ein Blinken oder einen Farbwechsel der LED beim Betätigen des Betätigungselementes 11 ein in Kürze erforderlicher Batteriewechsel signalisiert wird.

Die Figur 1 zeigt deutlich, dass auf jeder Betätigungsoberfläche 2a, 3a, 4a jeweils ein Erkennungselement 2c, 3c, 4c angeordnet ist, welches taktil vom Benutzer wahrgenommen werden kann. Auch ist erkennbar, dass die Betätigungselemente 2, 3, 4 mit jeweils einer Seite der Randbereiche 2b, 3b, 4b aneinander liegen. Die Betätigungselemente 2, 3, 4 sind dabei alle in einer gemeinsamen Fassung des Gehäuses 5, insbesondere an der Oberseite 5a des Gehäuses 5 angeordnet. Diese Fassung bildet gleichzeitig den Gesamtumfang der Betätigungselemente 2, 3, 4 bzw. der gemeinsamen Gesamtoberfläche.

In dem Ausführungsbeispiel aus Figur 1 ist es denkbar, dass die Betätigungselemente 2, 3, 4 aus einem elastischen Material, insbesondere einem elastischen Kunststoffmaterial, bestehen. Des Weiteren ist es von Vorteil, wenn das Gehäuse 5 der elektrischen Betätigungseinheit 1 ergonomisch ausgeführt ist, um die Handhabung bzw. Betätigung weiter zu verbessern. Hierzu können zusätzliche Griffmulden im Gehäuse 5 für die Finger eines Bedieners vorgesehen sein.

Die Betätigungselemente 2, 3, 4 bilden eine Bedienungseinheit innerhalb des Gehäuses 5. Hierbei ist die Gesamtoberfläche, die sich durch die einzelnen Betätigungsflächen 2a, 3a, 4a bildet, schuppenartig oder rampenartig ausgeführt, welches besonders in Figur 2 verdeutlicht ist. Hierbei ist der Randbereich 2b, 3b, 4b des jeweiligen Betätigungselementes 2, 3, 4, der dem benachbarten Betätigungselement 3, 4 oder dem Gehäuse 5 zugewandt ist, taktil ausgestaltet. Das bedeutet, dass insbesondere die Randbereiche 2b, 3b, 4b erhöht ausgeführt sind, wodurch ein schuppenartiges Profil der sich bildenden Gesamtoberfläche aller Betätigungselemente 2, 3, 4 bildet. Der Benutzer kann durch ein Gleiten seines Daumens oder Fingers insbesondere die Randbereiche 2b, 3b, 4b besonders gut spüren und somit die einzelnen Betätigungselemente 2, 3, 4 zuverlässig ertasten und dadurch voneinander unterscheiden. Zusätzlich wird die taktile Erkennung durch die rampenförmig nach oben verlaufenden Betätigungsflächen 2a, 3a, 4a verstärkt. Ebenfalls können die Kanten zu den Randbereichen 2b, 3b, 4b abgerundet sein, dabei kann der Kantenradius insbesondere zwischen 0,05 mm und 0,2 mm liegen. Hierdurch lässt sich verhindern, dass die Kanten einem erhöhten Verschleiß unterliegen.

Gemäß Figur 3 ist eine weitere Ausführungsform der Betätigungsflächen 2a, 3a, 4a dargestellt, wobei die Betätigungsflächen 2a, 3a, 4a planar ausgeführt sind. Die Betätigungsflächen 2a, 3a, 4a sind zur Oberfläche des Gehäuses in einem Winkel geneigt, der kleiner ist als 3°. Dieser Neigungswinkel unterstützt neben den herausragenden Randbereichen 2b, 3b, 4b die jeweilige fühlbare Erkennung des einzelnen Betätigungselementes 2, 3, 4. Diese Erhebungen müssen nicht ausschließlich am Randbereich 2b, 3b, 4b des jeweiligen Betätigungselementes 2, 3, 4 positioniert sein, sondern können beispielsweise auch mittig am Betätigungselement 2, 3, 4 angeordnet sein. Auch hierdurch lässt sich das schuppenartige oder rampenartige Profil der Gesamtoberfläche bilden. Dabei ist es auch denkbar, dass diese Erhebungen auf den Betätigungselementen 2, 3, 4 wellenförmig bzw. einem Tal-Berg-Profil ähnlich ausgestaltet sein können.

In einer weiteren möglichen Alternative der Erfindung können die Betätigungsflächen 2a, 3a, 4a unterschiedlich in einem Winkel zur Oberfläche 5a des Gehäuses 5 geneigt sein, welches in Figur 4 verdeutlicht ist. Des Weiteren sind die Tastflächen 2a, 3a, 4a in ihrer Größe unterschiedlich ausgeführt.

Ebenfalls ist es in einer weiteren Alternative der steuerelektronischen Betätigungseinheit 1 möglich, die Gesamtoberfläche der einzelnen Betätigungsflächen 2a, 3a, 4a bzw. die Betätigungselemente 2, 3, 4 leicht abgesenkt im Gehäuse 5 anzuordnen, welches in Figur 5 exemplarisch dargestellt ist. Dabei ist es auch sichtbar, dass die Betätigungselemente 2, 3, 4 von dem Gehäuse 5 umfasst werden, wodurch eine Fassung für die gemeinsame Gesamtoberfläche gebildet ist.

Gemäß Figur 6 ist ein elektronischer Schlüssel 1 mit drei Betätigungselementen 2, 3, 4 dargestellt, die in einem Gehäuse 5 eingefasst sind. Im vorderen Bereich ist das Gehäuse 5 mit einem Frontteil 8 ausgeführt. Wie Figur 6 verdeutlicht, sind die Außenkonturen der jeweiligen Betätigungselemente 2, 3, 4 unterschiedlich voneinander ausgebildet. Das obere Betätigungselement 2 ist hierbei dreieckig ausgeführt. Das mittlere Betätigungselement 3 weist eine trapezförmige Außenkontur auf und das untere Betätigungselement 4 hat eine rechteckförmige Außenkontur. Bei diesem Schlüssel weist jeweils das Betätigungselement zum benachbarten Betätigungselement einen bestimmten Abstand auf, welches insbesondere in Figur 7 dargestellt ist. Allein aufgrund der unterschiedlichen Außenkonturen kann der Bediener zuverlässig das jeweilige Element 2, 3, 4 ertasten. Der Übergang von einem Betätigungselement zum benachbarten Betätigungselement wird insbesondere im Zwischenraum, der den Abstand zwischen beiden Elementen bildet, taktil wahrgenommen. Zu diesem Zweck sind die Betätigungselemente 2, 3, 4 erhöht zur Oberfläche 5a des Gehäuses 5 angeordnet.

Bezogen auf alle dargestellten Ausführungsbeispiele können die beschriebenen Betätigungselemente 2, 3, 4 einen oder mehrere Druckpunkte zur Aktivierung des Ver- und/oder Entriegelungsvorganges aufweisen. Wie in Figur 1 durch das jeweilige tastbare Erkennungselement 2c, 3c, 4c wird durch eine Betätigung des Elementes 2 ein Schließvorgang in der Schließvorrichtung ausgelöst. Bei der Betätigung des mittleren Betätigungselementes 3 wird ein Öffnungsvorgang, insbesondere der Fahrzeugtüren ausgelöst. Das untere Betätigungselement 4 bewirkt bei Aktivierung einen Öffnungsvorgang des Kofferraumes. Wie bereits erwähnt wurde, dient das Betätigungselement 11 im Zusammenhang mit der LED 6 beispielsweise zur Batteriezustandskontrolle, wobei die Batterie die notwendige Energie für die elektrische Betätigungseinheit 1 liefert. Die in den dargestellten Ausführungsbeispielen gezeigten elektronischen Schlüssel 1 sind des Weiteren mit einer Sende- und Empfangseinheit ausgestattet, die nicht explizit dargestellt ist, wodurch eine Datenkommunikation zwischen dem elektronischen Schlüssel und der Schließvorrichtung für ein Zugangskontrollverfahren durchgeführt werden kann.

Abschließend ist darauf hinzuweisen, dass eine Kombination der dargestellten technischen Merkmale aus den einzelnen Ausführungsbeispielen möglich ist, solange sie sich nicht explizit ausschließt. Des Weiteren ist die Erfindung nicht auf eine elektrische Betätigungseinrichtung 1 mit genau drei oder vier Betätigungselementen 2, 3, 4, 11 gerichtet, sondern sie kann auch mehr oder weniger Betätigungselemente aufweisen. Auch können die vorgesehenen Betätigungselementen 2, 3, 4, 11 gruppenweise in der Oberfläche 5a des Gehäuses 5 angeordnet werden.

### Bezugszeichenliste

- **1**: Elektronische Betätigungseinheit, elektronischer Schlüssel
- **2**: Betätigungselement
- **2a**: Betätigungsfläche
- **2b**: Randbereich der Betätigungsfläche
- **2c**: Erkennungselement
- **3**: Betätigungselement
- **3a**: Betätigungsfläche
- **3b**: Randbereich der Betätigungsfläche
- **3c**: Erkennungselement
- **4**: Betätigungselement
- **4a**: Betätigungsfläche
- **4b**: Randbereich der Betätigungsfläche
- **4c**: Erkennungselement
- **5**: Gehäuse
- **5a**: Oberfläche des Gehäuses
- **6**: LED
- **7**: Ausnehmung
- **8**: Frontteil
- **9**: Befestigungsmittel
- **10**: Druckknopf
- **11**: Betätigungselement

## Patentansprüche

1. Elektronische Betätigungseinheit (1) für eine Schließvorrichtung eines Kraftfahrzeuges, mit einem Gehäuse (5) aus Kunststoff, innerhalb dessen eine Elektronikeinheit für eine Datenkommunikation mit der Schließvorrichtung angeordnet ist, mit einer Vielzahl an Betätigungselementen (2,3,4) zur Aktivierung eines Ver- und/oder Entriegelungsvorganges der Schließvorrichtung,
wobei die Betätigungselemente (2,3,4) benachbart zueinander liegende Betätigungsflächen (2a,3a,4a) aufweisen,
**dadurch gekennzeichnet,**
**dass** die einzelnen Betätigungsflächen (2a,3a,4a) eine Gesamtoberfläche (2a,3a,4a) bilden, die schuppenartig ausgeführt ist, wobei
die Betätigungselemente (2,3,4) einen erhöhten Randbereich (2b,3b,4b) aufweisen, der taktil ausgestaltet ist,
wodurch eine taktile Wahrnehmung der einzelnen Betätigungselemente (2,3,4), die unmittelbar aneinander anliegen, erreichbar ist.

2. Elektronische Betätigungseinheit (1) nach Anspruch 1,
**dadurch gekennzeichnet,**
**dass** die Betätigungsfläche (2a,3a,4a) zur Oberfläche (5a) des Gehäuses (5) in einem Winkel geneigt ist, der kleiner ist als 10°, vorzugsweise kleiner ist als 5°, mehr bevorzugt kleiner ist als 3° und besonders bevorzugt kleiner ist als 1°.

3. Elektronische Betätigungseinheit (1) nach einem der vorhergehenden Ansprüche,
**dadurch gekennzeichnet,**
**dass** die Betätigungsfläche (2a,3a,4a) zur benachbarten Betätigungsfläche (2a,3a,4a) unterschiedlich geneigt ist.

4. Elektronische Betätigungseinheit (1) nach einem der vorhergehenden Ansprüche,
**dadurch gekennzeichnet,**
**dass** die Betätigungsfläche (2a,3a,4a) konkav ausgeführt ist.

5. Elektronische Betätigungseinheit (1) nach einem der vorhergehenden Ansprüche,
**dadurch gekennzeichnet,**
**dass** das Betätigungselement (2,3,4) zumindest einen Druckpunkt zur Aktivierung des Ver- und/oder Entriegelungsvorganges aufweist.

6. Elektronische Betätigungseinheit (1) nach einem der vorhergehenden Ansprüche,
**dadurch gekennzeichnet,**
**dass** der Randbereich (2b,3b,4b) des Betätigungselementes (2,3,4) dem benachbarten Betätigungselement (2,3,4) und/oder dem Gehäuse (5) zugewandt ist.

7. Elektronische Betätigungseinheit (1) nach einem der vorhergehenden Ansprüche,
**dadurch gekennzeichnet,**
**dass** die Außenkontur des Betätigungselementes (2,3,4) im wesentlichen rund, oval, dreieckig, rechteckig, quadratisch oder vieleckig ausgeführt ist.

8. Elektronische Betätigungseinheit (1) nach einem der vorhergehenden Ansprüche,
**dadurch gekennzeichnet,**
**dass** die Betätigungsfläche (2a,3a,4a) eine Rauhigkeit aufweist, die unterschiedlich zur Rauhigkeit der benachbarten Betätigungsfläche (2a,3a,4a) ist.

9. Elektronische Betätigungseinheit (1) nach einem der vorhergehenden Ansprüche,
**dadurch gekennzeichnet,**
**dass** die Betätigungsflächen (2a,3a,4a) materialeinheitlich miteinander verbunden sind.

10. Elektronische Betätigungseinheit (1) nach einem der vorhergehenden Ansprüche,
**dadurch gekennzeichnet,**
**dass** das Betätigungselement (2,3,4) mindestens ein tastbares Erkennungselement (2c,3c,4c) aufweist.

11. Elektronische Betätigungseinheit (1) nach einem der vorhergehenden Ansprüche,
**dadurch gekennzeichnet,**
**dass** das Gehäuse (5) mit einer Ausnehmung (7) ausgeführt ist, in der ein Notschlüssel anordbar ist.

## Claims

1. An electronic actuation unit (1) for a closing device of a motor vehicle, having a casing (5) made of plastic inside which there is arranged an electronic unit for data communication with the closing device, having a plurality of actuation elements (2, 3, 4) for the activation of a locking and/or unlocking process of the closing device,
wherein the actuation elements (2, 3, 4) have actuation areas (2a, 3a, 4a) which are adjacent to each other,
**characterised in that**
the individual actuation areas (2a, 3a, 4a) form an overall surface (2a, 3a, 4a) which has a scale-like configuration, wherein
the actuation elements (2, 3, 4) have a raised edge region (2b, 3b, 4b) which is configured in a tactile manner,
whereby a tactile perception of the individual actuation elements (2, 3, 4), which are immediately adjacent to each other, can be achieved.

2. The electronic actuation unit (1) according to claim 1,
**characterised in that**
the actuation area (2a, 3a, 4a) is inclined in relation to the surface (5a) of the casing (5) at an angle that is smaller than 10°, preferably smaller than 5°, more preferred smaller than 3° and particularly preferred smaller than 1°.

3. The electronic actuation unit (1) according to one of the previous claims,
**characterised in that**
the actuation area (2a, 3a, 4a) is inclined differently in relation to the adjacent actuation area (2a, 3a, 4a).

4. The electronic actuation unit (1) according to one of the previous claims,
**characterised in that**
the actuation area (2a, 3a, 4a) has a concave configuration.

5. The electronic actuation unit (1) according to one of the previous claims,
**characterised in that**
the actuation element (2, 3, 4) has at least one action point for the activation of the locking and/or unlocking process.

6. The electronic actuation unit (1) according to one of the previous claims,
**characterised in that**
the edge region (2b, 3b, 4b) of the actuation element (2, 3, 4) is facing the adjacent actuation element (2, 3, 4) and/or the casing (5).

7. The electronic actuation unit (1) according to one of the previous claims,
**characterised in that**
the outer contour of the actuation element (2, 3, 4) is configured to be substantially round, oval, triangular, rectangular, square or polygonal.

8. The electronic actuation unit (1) according to one of the previous claims,
**characterised in that**
the actuation area (2a, 3a, 4a) has a surface roughness which is different from the surface roughness of the adjacent actuation area (2a, 3a, 4a).

9. The electronic actuation unit (1) according to one of the previous claims,
**characterised in that**
the actuation areas (2a, 3a, 4a) are connected to each other in a materially integral manner.

10. The electronic actuation unit (1) according to one of the previous claims,
**characterised in that**
the actuation element (2, 3, 4) has at least one palpable identification element (2c, 3c, 4c).

11. The electronic actuation unit (1) according to one of the previous claims,
**characterised in that**
the casing (5) is configured with a recess (7) in which an emergency key can be arranged.

## Revendications

1. Unité d'actionnement électronique (1) pour un dispositif de fermeture d'un véhicule automobile, avec un boîtier (5) en matière plastique à l'intérieur duquel sont disposés une unité électronique pour une communication de données avec le dispositif de fermeture, avec une pluralité d'éléments d'actionnement (2, 3, 4) servant à activer un processus de verrouillage et/ou de déverrouillage du dispositif de fermeture,
les éléments d'actionnement (2, 3, 4) présentant des surfaces d'actionnement (2a, 3a, 4a) voisines les unes des autres,
**caractérisée en ce**
**que** les différentes surfaces d'actionnement (2a, 3a, 4a) forment une surface totale (2a, 3a, 4a) qui est réalisée en forme d'écaille,
les éléments d'actionnement (2, 3, 4) présentant une zone de bord (2b, 3b, 4b) surélevée qui est conformée de manière tactile,
de sorte qu'il est possible d'obtenir une perception tactile des différents éléments d'actionnement (2, 3, 4) qui sont directement en contact les uns avec les autres.

2. Unité d'actionnement électronique (1) selon la revendication 1,
**caractérisée en ce**
**que** les surfaces d'actionnement (2a, 3a, 4a) sont inclinées par rapport à la surface (5a) du boîtier (5) d'un angle qui est inférieur à 10°, de préférence inférieur à 5°, plus préférentiellement inférieur à 3° et particulièrement préférentiellement inférieur à 1 °.

3. Unité d'actionnement électronique (1) selon l'une des revendications précédentes,
**caractérisée en ce**
**que** la surface d'actionnement (2a, 3a, 4a) est inclinée différemment par rapport à la surface d'actionnement (2a, 3a, 4a) voisine.

4. Unité d'actionnement électronique (1) selon l'une des revendications précédentes,
**caractérisée en ce**
**que** la surface d'actionnement (2a, 3a, 4a) est concave.

5. Unité d'actionnement électronique (1) selon l'une des revendications précédentes,
**caractérisée en ce**
**que** l'élément d'actionnement (2, 3, 4) présente au moins un point de pression pour activer le processus de verrouillage et/ou de déverrouillage.

6. Unité d'actionnement électronique (1) selon l'une des revendications précédentes,
**caractérisée en ce**
**que** la zone de bord (2b, 3b, 4b) de l'élément d'actionnement (2, 3, 4) est tournée vers l'élément d'actionnement (2, 3, 4) voisin et/ou le boîtier (5).

7. Unité d'actionnement électronique (1) selon l'une des revendications précédentes,
**caractérisée en ce**
**que** le contour extérieur de l'élément d'actionnement (2, 3, 4) est essentiellement rond, ovale, triangulaire, rectangulaire, carré ou polygonal.

8. Unité d'actionnement électronique (1) selon l'une des revendications précédentes,
**caractérisée en ce**
**que** la surface d'actionnement (2a, 3a, 4a) présente une rugosité qui est différente de la rugosité de la surface d'actionnement (2a, 3a, 4a) voisine.

9. Unité d'actionnement électronique (1) selon l'une des revendications précédentes,
**caractérisée en ce**
**que** les surfaces d'actionnement (2a, 3a, 4a) sont reliées entre elles d'un seul tenant.

10. Unité d'actionnement électronique (1) selon l'une des revendications précédentes,
**caractérisée en ce**
**que** l'élément d'actionnement (2, 3, 4) présente au moins un élément de reconnaissance palpable (2c, 3c, 4c).

11. Unité d'actionnement électronique (1) selon l'une des revendications précédentes,
**caractérisée en ce**
**que** le boîtier (5) est réalisé avec un évidement (7) dans lequel une clé de secours peut être disposée.
